(19) **Europäisches Patentamt**

**European Patent Office**

**Office européen des brevets**

(11) **EP 1 074 003 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(21) Anmeldenummer: **99913082.6**

(22) Anmeldetag: **23.02.1999**

(51) Int Cl.⁷: **G06T 15/70**, B60K 35/00

(86) Internationale Anmeldenummer:
**PCT/DE99/00481**

(87) Internationale Veröffentlichungsnummer:
**WO 99/054850 (28.10.1999 Gazette 1999/43)**

(54) **Verfahren zur Darstellung von bewegten Objekten im Bitmapformat auf einer matrixförmigen Anzeigevorrichtung**

Method for representing moving objects in bitmap format on a matrix display device

Procédé de représentation d'objets mobiles en mode bitmap sur un dispositif d'affichage matriciel

(84) Benannte Vertragsstaaten:
**DE FR GB IT**

(30) Priorität: **16.04.1998 DE 19816795**

(43) Veröffentlichungstag der Anmeldung:
**07.02.2001 Patentblatt 2001/06**

(73) Patentinhaber: **ROBERT BOSCH GMBH**
**70442 Stuttgart (DE)**

(72) Erfinder: **GEISLER, Thomas**
**D-76137 Karlsruhe (DE)**

(56) Entgegenhaltungen:
**EP-A- 0 672 892   EP-A- 0 771 686**
**EP-A- 0 821 321   WO-A-98/06069**
**DE-U- 29 703 902   FR-A- 2 727 543**
**US-A- 5 442 737   US-A- 5 613 048**

- **PATENT ABSTRACTS OF JAPAN vol. 099, no. 004, 30. April 1999 (1999-04-30) & JP 11 020507 A (YAZAKI CORP), 26. Januar 1999 (1999-01-26)**

**Beschreibung**

Stand der Technik

Die vorliegende Erfindung betrifft ein Verfahren zur Darstellung von bewegten Objekten im Bitmapformat auf einer matrixförmigen Anzeigevorrichtung.

Obwohl auf beliebige Objekte im Bitmapformat und beliebige matrixförmige Anzeigevorrichtungen anwendbar, werden die vorliegende Erfindung sowie die ihr zu Grunde liegende Problematik in bezug auf eine an Bord eines Kraftfahrzeuges befindliche Dashboard-Anzeigevorrichtung zur Darstellung eines Zeigers erläutert. Eine gattungsgemäße Anzeigevorrichtung ist aus der EP 771686 A2 bekannt.

Allgemein ist es zur flüssigen bzw. gleitenden, d.h. nicht erkennbar springenden, Darstellung von Zeigeranimationen bei einer an Bord eines Kraftfahrzeuges befindlichen Dashboard-Anzeigevorrichtung erforderlich, einen erheblichen Rechenaufwand zu betreiben, der den Einsatz von dedizierter Graphik-Hardware und Software mit sich bringt.

Folgende Operationen müssen dabei üblicherweise durchgeführt werden.

Der als Bitmap vorliegende Zeiger, beispielsweise der Tachometerzeiger, muß in verschiedenen Geschwindigkeiten entsprechende Winkelpositionen rechnerisch gedreht werden.

In dieser Bitmap ist der Zeiger viel höher aufgelöst (Supersampling) als bei der tatsächlichen Darstellung auf der Anzeigevorrichtung, um anschließend, d.h. nach der rechnerischen Drehung, eine Filterung im Ortsbereich zum Zweck der Kantenglättung (Antialiasing) sinnvoll durchführen zu können. Üblicherweise entspricht ein Array von 3 x 3 = 9 Pixeln in der Bitmap einem einzigen Pixel der Anzeigevorrichtung. Jeder Pixel kann dabei 256 Bitwerte für jede einzelne der drei Grundfarben Rot, Grün und Blau annehmen.

Weiterhin ist eine rechnerische Überlagerung des Zeigers in jeder seiner Winkelpositionen mit einem entsprechenden Hintergrundbild, z.B. einer Skala, notwendig.

Die der vorliegenden Erfindung zugrundeliegende Problematik besteht allgemein darin, daß dieser Rechenaufwand bei der Darstellung von Objekten im Bitmapformat auf einer matrixförmigen Anzeigevorrichtung auf üblicher Hardware mit Personalcomputer-ähnlicher Struktur nicht ausreichend schnell zu bewerkstelligen ist. Daraus resultierend bewegt sich das darzustellende Objekt entlang der vorgegebenen Bahnkurve langsam und in sichtbaren Stufen, was ein Unbehagen beim Betrachter auslöst.

Gemäß dem Stand der Technik ist eine Antialiasing-Verarbeitung hard- bzw. softwaremäßig nur bei der Kantenglättung von als Vektordaten vorliegenden Objekten, z.B. einer Linie oder eines Kreises, oder bei der Darstellung von Füllmustern, die die Wiederholung eines relativ kleinflächigen Grundmusters darstellen, ausreichend schnell durchführbar.

Zeiger inklusive ihrer Nabe mit beliebigen Farbmustern und Gestalten, wie sie vom Kunden und Designer gewünscht werden, lassen sich jedoch nur vernünftig als Bitmap darstellen.

Ferner ist aus der US 5,613,048 ein dreidimensionales Bildsyntheseverfahren bekannt, bei dem mittels Morphingtechnik eine fließende Darstellung zwischen verschiedenen, gespeicherten Ansichten eines Bildes gewechselt werden kann. Hierdurch kann ein anderer Blickwinkel auf das Bild simuliert werden. Ein Morphingübergang erfolgt dabei in der Weise, dass für den Übergang zwischen zwei Bildern neben den gespeicherten Bildern auch jeweils eine Matrix gespeichert ist, die auf die Pixel des Ausgangsbildes angewandt wird. Mit Durchlaufen eines Parameters werden durch das Anwenden der Matrix die Bildpunkte des Ausgangsbildes auf die Bildpunkte des Zielbildes transformiert. Für die zahlreichen zu speichernden Matrizen ist ein hoher Speicherbedarf erforderlich, wobei eine CD-ROM verwendet wird.

Aus der EP 821 321 A1 ist ein Verfahren zur Videoausgabe bekannt, bei der ein möglichst flüssiger Übergang zwischen zwei gegebenen Rahmenbildern durch eine gewichtete Interpolation der Rahmenbilder erreicht wird.

Vorteile der Erfindung

Das erfindungsgemäße Verfahren zur Darstellung von Objekten im Bitmapformat auf einer matrixförmigen Anzeigevorrichtung nach Anspruch 1 weist den Vorteil auf, dass es den Online-Rechenaufwand zur Darstellung von Zeigern im Bitmapformat auf einer matrixförmigen Anzeigevorrichtung erheblich reduziert und somit mit üblicher Hardware eine fließende Darstellung ohne Sprünge ermöglicht.
Beliebige graphische Objekte können in hoher Qualität zur Animation herangezogen werden. Alle diese Objekte werden und müssen nicht umständlich vektoriell beschrieben werden.

Die der vorliegenden Erfindung zu Grunde liegende Idee besteht darin, dass die zeitaufwendigen Berechnungen offline im voraus für eine bestimmte Anzahl verschiedener Objektdarstellungen entlang einer entsprechenden Bahnkurve durchgeführt werden. Die Objektdarstellungen, die so in ortsdiskreten vorverarbeiten Positionen vorliegen, werden als jeweilige Bitmap gespeichert. Während der Laufzeit des Darstellungsprogramms wird nur die situationsbedingt anzuzeigende Bitmap aus dem Speicher gelesen und angezeigt. Dieser Bitmap wird zweckmäßigerweise das ebenfalls vorverarbeitete und abgespeicherte Hintergrundbild überlagert.

In den Unteransprüchen finden sich vorteilhafte Weiterbildungen und Verbesserungen des in Anspruch 1 angegebenen Verfahrens.

Gemäß einer bevorzugten Weiterbildung wird beim Berechnen der Mehrzahl von Bitmaps im voraus eine Filterung zum Zweck der Kantenglättung im Ortsbereich durchgeführt. Dies hat den Vorteil, daß auch diese zeitaufwendige Rechenoperation offline durchgeführt werden kann.

Gemäß einer weiteren bevorzugten Weiterbildung wird den jeweiligen Objektdarstellungen ein zugehöriges vorberechnetes und vorabgespeichertes Hintergrundbild überlagert. Dies ist zweckmäßig, da sich das Hintergrundbild wesentlich seltener ändert als das Vordergrundbild mit dem entlang der Bahnkurve beweglichen Objekt.

Gemäß einer weiteren bevorzugten Weiterbildung ist der räumliche Unterschied zwischen benachbarten Objektdarstellungen entlang der Bahnkurve, die als jeweilige Bitmap vorberechnet und vorabgespeichert sind, wesentlich kleiner als die betreffenden Objektdarstellungen. Mit anderen Worten muß eine vernünftige Korrelation zwischen zwei benachbarten Objektdarstellungen entlang der Bahnkurve vorherrschen, damit vernünftige Ergebnisse erzielbar sind. Ein Gegenbeispiel wären zwei Zeigerstellungen, von denen die eine "12 Uhr" und die andere "3 Uhr" anzeigt.

Gemäß einer weiteren bevorzugten Weiterbildung wird zum Anzeigen von Objektdarstellungen, die zwischen zwei Objektdarstellungen mit einer jeweiligen vorberechneten und vorabgespeicherten Bitmap liegen, eine paarweise Interpolation zwischen den entsprechenden Pixelwerten (Bildpunkten) durchgeführt. Durch solch ein Interpolationsverfahren kann die Objektbahnauflösung beliebig fein gestaltet werden. Außerdem erspart dies Speicherplatz, der für die vorberechneten Bitmaps notwendig ist.

Gemäß einer weiteren bevorzugten Weiterbildung liegen die Pixelwerte getrennt nach bestimmten Farben, vorzugsweise den drei Grundfarben Rot - Gün-Blau, vor und wird die Interpolation für jede Farbe separat durchgeführt.

Gemäß einer weiteren bevorzugten Weiterbildung wird zur Interpolation der entsprechend der Zwischenlage gewichtete Mittelwert für jedes Pixel berechnet. Dies entspricht einer einfachen linearen Interpolation in Abhängigkeit von der Position der Zwischenlage.

Gemäß einer weiteren bevorzugten Weiterbildung wird eine Komprimierung der vorabgespeicherten Bitmapdaten durchgeführt. Dies führt insbesondere dann zu einem guten Ergebnis, wenn große Bildflächen mit einem einfarbigen Hintergrund vorhanden sind.

ZEICHNUNGEN

Ausführungsbeispiele der Erfindung sind in den Zeichnungen dargestellt und in der nachfolgenden Beschreibung näher erläutert.

Es zeigen:

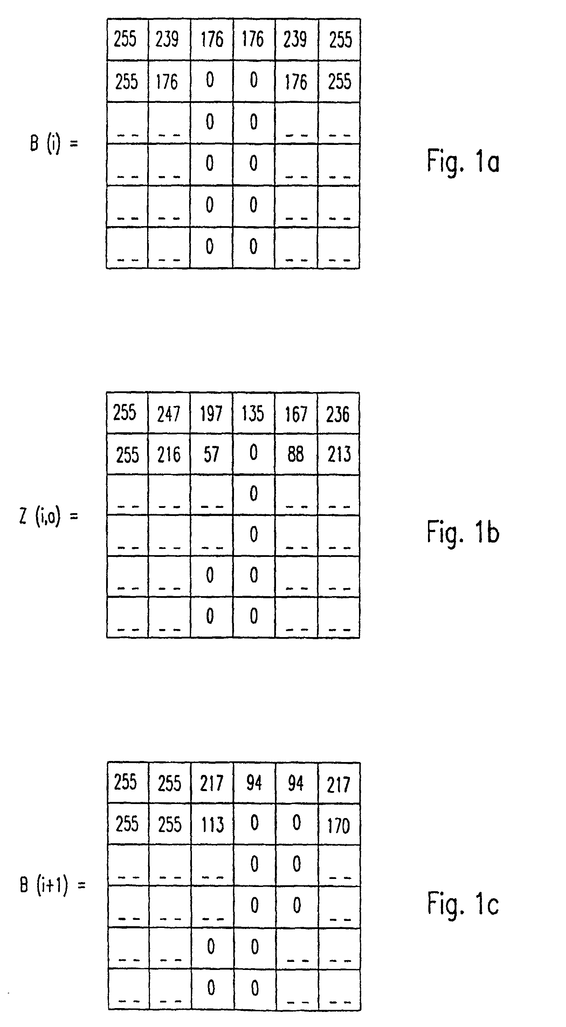

Fig. 1a    eine Bitmap B(i) zur Darstellung eines Zeigers im Bitmapformat auf einer matrixförmigen Anzeigevorrichtung eines Dashboardinstruments an einem iten Punkt einer Bahnkurve;

Fig. 1b    eine im Online-Betrieb linear interpolierte Zwischenbitmap Z(i,a) zur Darstellung eines Zeigers im Bitmapformat auf einer matrixförmigen Anzeigevorrichtung eines Dashboardinstruments an einem (i+a)-ten Punkt der Bahnkurve, wobei a = 0,5 ist; und

Fig. 1c    eine Bitmap B(i+1) zur Darstellung eines Zeigers im Bitmapformat auf einer matrixförmigen Anzeigevorrichtung eines Dashboardinstruments an einem benachbarten (i+1)-ten Punkt der Bahnkurve.

BESCHREIBUNG DER AUSFÜHRUNGSBEISPIELE

Im folgenden wird eine Ausführungsform des erfindungsgemäßen Verfahrens zur Darstellung von Objekten im Bitmapformat auf einer matrixförmigen Anzeigevorrichtung in Anwendung auf eine an Bord eines Kraftfahrzeuges befindliche Dashboard-Anzeigevorrichtung zur Darstellung eines Zeigers unter Bezugnahme auf Fig. 1a bis 1c erläutert.

Zunächst erfolgt offline ein Berechnen einer Mehrzahl von Bitmaps für eine bestimmte Anzahl verschiedener Zeigerdarstellungen entlang einer vorbestimmten Bahnkurve, nämlich beispielsweise entlang einer kreisförmigen Skala als Hintergrund. Bereits bei diesen Berechnungen der Mehrzahl von Bitmaps im voraus wird eine Filterung zum Zweck der Kantenglättung im Ortsbereich durchgeführt, um die späteren Online-Berechnungen so niedrig wie möglich und damit die Anzeigegeschwindigkeit so hoch wie möglich zu gestalten.

Der räumliche Unterschied zwischen benachbarten Zeigerdarstellungen entlang der Bahnkurve, die als jeweilige Bitmap vorberechnet und vorabgespeichert sind, ist dabei wesentlich kleiner als die betreffenden Zeigerdarstellungen. Der genaue Unterschied muß entsprechend den jeweiligen Zeigerdarstellungen von Fall zu Fall optimiert werden.

Die berechnete Mehrzahl von Bitmaps wird im voraus in einer zur Dashboard-Anzeigevorrichtung gehörigen Speichervorrichtung abgelegt. Dabei muß im allgemeinen ein Kompromiß zwischen zur Verfügung stehenden Speicherplatz und der gewünschten Feinauflösung getroffen werden.

Im Online-Betrieb erfolgt dann während der Fahrt das Ausführen einer Darstellungsverarbeitung mit einer Anzeigesequenz von Zeigerdarstellungen entlang der Bahnkurve durch Lesen und Anzeigen entsprechender gespeicherter Bitmaps. Wenn der Zeiger der Tachometerzeiger ist, wird also jeweils die der Momentangeschwindigkeit entsprechende Zeiger-Bitmap gelesen und angezeigt.

Die entsprechende Skala, die ein zugehöriges vorberechnetes und vorabgespeichertes Hintergrundbild ist, wird dabei der Zeigerdarstellung überlagert.

Es sei nun beispielshalber angenommen, daß in Fig. 1a eine Bitmap B(i) zur Darstellung des Zeigers im Bitmapformat auf der matrixförmigen Anzeigevorrichtung des Dashboardinstruments an einem i-ten Punkt der Bahnkurve, und zwar zur Anzeige von 120 km/h, dargestellt ist.

Weiterhin sei angenommen, daß in Fig. 1b eine Bitmap B(i+1) zur Darstellung des Zeigers im Bitmapformat auf der matrixförmigen Anzeigevorrichtung des Dashboardinstruments an einem benachbarten (i+1)-ten Punkt der Bahnkurve, und zwar zur Anzeige von 125 km/h, darstellt.

Eine Bitmap zur Darstellung eines Zeigers im Bitmapformat auf der matrixförmigen Anzeigevorrichtung des Dashboardinstruments an einem dazwischenliegenden Punkt der Bahnkurve, und zwar zur Anzeige von 122,5 km/h, ist nicht gespeichert.

Bei dieser Ausführungsform der Erfindung wird ein Anzeigen solch einer Zeigerdarstellung, die zwischen zwei Zeigerdarstellungen mit einer jeweiligen vorberechneten und vorabgespeicherten Bitmap liegen, durch eine paarweise Interpolation zwischen den entsprechenden Pixelwerten durchgeführt. Dabei werden allgemein die Pixelwerte getrennt nach bestimmten Farben, vorzugsweise den drei Grundfarben Rot - Gün-Blau, vorliegen und die Interpolation für jede Farbe separat durchgeführt.

Bei diesem Beispiel sei jedoch zur Vereinfachung angenommen, daß die Zeigerdarstellung jeweils in nur einer Grundfarbe vorgenommen wird bzw. daß die Werte für alle drei Grundfarben gleich sind. Die dabei auftretenden 256 Werte liegen zwischen 0 und 255. 0 bezeichnet dabei den dunkelsten und 255 den hellsten Wert. Weiterhin sei erwähnt, daß aus Übersichtlichkeitsgründen nicht alle Pixelwerte in die Bitmaps der Fig. 1a bis 1c eingetragen sind.

Fig. 1b ist eine im Online-Betrieb linear interpolierte Zwischenbitmap $Z(i,a)$ zur Darstellung des Zeigers im Bitmapformat auf der matrixförmigen Anzeigevorrichtung des Dashboardinstruments an einem $(i+a)$-ten Punkt der Bahnkurve, wobei hier $a = 0,5$ ist, denn 122,5 km/h liegt genau in der Mitte zwischen 120 km/h und 125 km/h.

Die Pixelwerte $Z_{mn}(i,a)$ der Zwischenbitmap $Z(i,a)$ lassen sich also folgendermaßen berechnen:

$$Z_{mn}(i,a) = (1-a) * B_{mn}(i) + a * B_{mn}(i+1) \qquad (1)$$

wobei m der Zeilenindex und n der Spaltenindex ist. Die Pixelwerte $Z_{mn}(i,a)$ sind also hier gerade die Mittelwerte der Pixelwerte $B_{mn}(i)$ und $B_{mn}(i+1)$.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist anstelle der obigen linearen Interpolation selbstverständlich jegliche andere Interpolation möglich.

Auch ist die Interpolation nicht unbedingt notwendig, sondern hängt von der Speicherkapazität und der gewünschten Feinauflösung ab. Beispielsweise ist es nicht notwendig, unterhalb einer bestimmten Schwelldifferenz, eine Interpolation durchzuführen, welche im obigen Beispiel 1 km/h betragen könnte.

Um Speicherplatz zu sparen, kann man sich einer Komprimierung/Dekomprimierung der der vorabgespeicherten Bitmapdaten, also Zeigerdaten und/oder Hintergrunddaten bedienen.

**Patentansprüche**

1. Verfahren zur Darstellung eines Zeigers im Bitmap-Format auf einer an Bord eines Kraftfahrzeugs befindlichen, matrixförmigen Anzeigevorrichtung, **gekennzeichnet durch** die Schritte: Abspeichern einer Mehrzahl von Bitmaps für jeweils verschiedene Zeigerdarstellungen entlang einer vorbestimmten Bahnkurve im voraus und Ausführen einer Darstellungsverarbeitung mit einer Anzeigesequenz von Zeigerdarstellungen entlang der Bahnkurve **durch** Lesen und Anzeigen entsprechender gespeicherter Bitmaps.

2. Verfahren nach Anspruch 1, **dadurch gekennzeichnet, dass** die Mehrzahl von Bitmaps im voraus berechnet wird.

3. Verfahren nach Anspruch 2, **dadurch gekennzeichnet, dass** beim Berechnen der Mehrzahl von Bitmaps im voraus eine Filterung zum Zweck der Kantenglättung im Ortsbereich durchgeführt wird.

4. Verfahren nach einem der vorhergehenden Ansprüche, **dadurch gekennzeichnet, dass** den jeweiligen Zeigerdarstellungen ein zugehöriges vorberechnetes und vorab gespeichertes Hintergrundbild überlagert wird.

5. Verfahren nach Anspruch 4, **dadurch gekennzeichnet, dass** als Hintergrundbild eine kreisförmige Skala dargestellt wird.

6. Verfahren nach einem der vorhergehenden Ansprüche, **dadurch gekennzeichnet, dass** der räumliche Unterschied zwischen benachbarten Zeigerdarstellungen entlang der Bahnkurve, die als jeweilige Bitmaps vorab gespeichert sind, wesentlich kleiner ist als die betreffenden, benachbarten Zeigerdarstellungen.

7. Verfahren nach einem der vorhergehenden Ansprüche, **dadurch gekennzeichnet, dass** zum Anzeigen von Zeigerdarstellungen die zwischen zwei Zeigerdarstellungen mit einer jeweiligen vorab gespeicherten Bitmap liegen, eine paarweise Interpolation zwischen den entsprechenden Pixelwerten durchgeführt wird.

8. Verfahren nach Anspruch 7, **dadurch gekennzeichnet, dass** die Pixelwerte getrennt nach bestimmten Farben, vorzugsweise den drei Grundfarben Rot - Grün - Blau, vorliegen und die Interpolation für jede Farbe separat durchgeführt wird.

9. Verfahren nach Anspruch 8, **dadurch gekennzeichnet, dass** zur Interpolation der entsprechend der Zwischenlage gewichtete Mittelwert für jedes Pixel berechnet wird.

10. Verfahren nach einem der vorhergehenden Ansprüche, **dadurch gekennzeichnet, dass** eine Komprimierung der vorab gespeicherten Bitmapdaten durchgeführt wird.

**Claims**

1. Method for representing a pointer in bitmap format on a matrix display device located on board a motor vehicle, **characterized by** the steps: storage of a plurality of bitmaps, for respectively different pointer representations along a predetermined path curve in advance, and execution of representational processing with a display sequence of pointer representations along the path curve by reading and displaying corresponding, stored bitmaps.

2. Method according to Claim 1, **characterized in that** the plurality of bitmaps is calculated in advance.

3. Method according to Claim 2, **characterized in that**, when the plurality of bitmaps is calculated in advance, filtering is carried out for the purpose of smoothing edges in the space domain.

4. Method according to one of the preceding claims, **characterized in that** an associated precalculated background image which is stored in advance is superimposed on the respective pointer representations.

5. Method according to Claim 4, **characterized in that** a circular scale is represented as the background image.

6. Method according to one of the preceding claims, **characterized in that** the spatial difference between adjacent pointer representations along the path curve, which are stored as respective bitmaps in advance, is significantly smaller than the relevant adjacent pointer representations.

7. Method according to one of the preceding claims, **characterized in that**, in order to display pointer representations which lie between two pointer representations with the respective bitmap stored in advance, pairwise interpolation is carried between the corresponding pixel values.

8. Method according to Claim 7, **characterized in that** the pixel values are present, separated according to certain colours, preferably the three primary colours red, green and blue, and the interpolation is carried out separately for each colour.

9. Method according to Claim 8, **characterized in that**, for the interpolation, the mean value which is weighted according to the intermediate position is calculated for each pixel.

10. Method according to one of the preceding claims, **characterized in that** compression of the bitmap data stored in advance is carried out.

**Revendications**

1. Procédé de représentation d'un index au format carte bitmap sur un dispositif d'affichage matriciel embarqué dans un véhicule,
**caractérisé par** les étapes suivantes :

- on enregistre en mémoire un ensemble de cartes bitmap pour des représentations d'index différentes selon une trajectoire courbe prédéterminée,
- on exécute un travail de représentation avec une séquence d'affichage de représentation d'index le long de la trajectoire courbe par lecture et affichage des cartes bitmap correspondantes mises en mémoire.

2. Procédé selon la revendication 1,
**caractérisé en ce que**
l'ensemble des cartes bitmap est calculé au préalable.

3. Procédé selon la revendication 2,
**caractérisé en ce que**
dans le calcul de l'ensemble des cartes bitmap au préalable on effectue un filtrage pour lisser les bords dans la zone locale.

4. Procédé selon l'une quelconque des revendications précédentes,
   **caractérisé en ce qu'**
   on combine aux représentations d'index respectives, une image de fond calculée préalablement en correspondance et préalablement mise en mémoire.

5. Procédé selon la revendication 4,
   **caractérisé en ce que**
   comme image de fond on représente une graduation circulaire.

6. Procédé selon l'une quelconque des revendications précédentes,
   **caractérisé en ce qu'**
   la différence spatiale entre les représentations d'index, voisines le long de la trajectoire courbe, et qui sont enregistrées au préalable comme des cartes bitmap respectives, est beaucoup plus faible que celle des représentations d'index, voisines concernées.

7. Procédé selon l'une quelconque des revendications précédentes,
   **caractérisé en ce que**
   pour afficher les représentations d'index situées entre deux représentations d'index avec une carte bitmap respective enregistrée au préalable, on effectue une interpolation par paire entre les valeurs de pixel correspondantes.

8. Procédé selon la revendication 7,
   **caractérisé en ce que**
   les valeurs de pixel existent séparément pour chaque couleur de préférence les trois couleurs de base rouge, vert, bleu et on effectue séparément l'interpolation pour chaque couleur.

9. Procédé selon la revendication 8,
   **caractérisé en ce que**
   l'on calcule pour chaque pixel une valeur moyenne pondérée par interpolation de la position intermédiaire correspondante.

10. Procédé selon l'une quelconque des revendications précédentes,
    **caractérisé en ce qu'**
    on effectue une compression des données des cartes Bitmap enregistrées au préalable.

$$B\ (i)\ =$$

| 255 | 239 | 176 | 176 | 239 | 255 |
|---|---|---|---|---|---|
| 255 | 176 | 0 | 0 | 176 | 255 |
| -- | -- | 0 | 0 | -- | -- |
| -- | -- | 0 | 0 | -- | -- |
| -- | -- | 0 | 0 | -- | -- |
| -- | -- | 0 | 0 | -- | -- |

Fig. 1a

$$Z\ (i,o)\ =$$

| 255 | 247 | 197 | 135 | 167 | 236 |
|---|---|---|---|---|---|
| 255 | 216 | 57 | 0 | 88 | 213 |
| -- | -- | -- | 0 | -- | -- |
| -- | -- | -- | 0 | -- | -- |
| -- | -- | 0 | 0 | -- | -- |
| -- | -- | 0 | 0 | -- | -- |

Fig. 1b

$$B\ (i+1)\ =$$

| 255 | 255 | 217 | 94 | 94 | 217 |
|---|---|---|---|---|---|
| 255 | 255 | 113 | 0 | 0 | 170 |
| -- | -- | -- | 0 | 0 | -- |
| -- | -- | -- | 0 | 0 | -- |
| -- | -- | 0 | 0 | -- | -- |
| -- | -- | 0 | 0 | -- | -- |

Fig. 1c